# EUROPEAN PATENT APPLICATION

(11) **EP 4 287 561 A1**
(43) Date of publication of application: **06.12.2023**
(21) Application number: 21921863.3
(22) Date of filing: 29.01.2021
(51) Int. Cl.: H04L 12/00

(54) **DATA PACKET SENDING METHOD, DATA PACKET SENDING APPARATUS, AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: dompatent von Kreisler Selting Werner - Partnerschaft von Patent- und Rechtsanwälten mbB
(86) International application number: PCT/CN2021/074441
(87) International publication number: WO 2022/160258

(57) **Abstract**

The present disclosure relates to a data packet transmission method, a data packet transmission apparatus, and a storage medium. The data packet transmission method is applied to a first device and includes: transmitting a first data packet in a first data packet format, wherein the first data packet format includes a router identifier field and a time field, the router identifier field including a router identifier that indicates a router for forwarding the first data packet, and the time field including a first time corresponding to the router identifier. With the present disclosure, an accurate time for a data packet to arrive at a destination device can be ensured.

## Description

### TECHNICAL FIELD

The present disclosure relates to the field of wireless communication technology, and in particular to a data packet transmission method, a data packet transmission apparatus, and a storage medium.

### BACKGROUND

Internet Protocol (IP) is a protocol for transfer of information between networks, allowing IP data packets, also known as IP information packets, to be transferred from a source device, also known as a transmitter device, to a destination device, also known as a receiver device. During transfer of the IP data packets from the source device to the destination device, the IP data packets are usually transmitted based on a network transmission mechanism of a router.

In the related art, individual networks are connected to each other through routers. The function of a router is to select a transfer path for an IP data packet. The source device transmits the IP data packet, and the router selects a transmission path for the IP data packet based on the network transmission mechanism of the router, to transmit the IP data packet to the destination device. That is, during transmission of the IP data packet, the router forwards the IP data packet, and the source device does not know the transmission path of the IP data packet, and the time for each router to process the IP data packet cannot be determined. Therefore, the source device cannot determine the time when the IP data packet arrives at the destination device after transmitting the IP data packet.

### SUMMARY

In order to overcome the problems in the related art, the present disclosure provides a data packet transmission method, a data packet transmission apparatus, and a storage medium.

According to a first aspect of embodiments of the present disclosure, there is provided a data packet transmission method, applied to a first device, the method including:
transmitting a first data packet in a first data packet format, wherein the first data packet format includes a router identifier field and a time field, the router identifier field including at least one router identifier that indicates at least one router for forwarding the first data packet, and the time field including at least one first time corresponding to the at least one router identifier.

In an embodiment, each of the at least one first time is a time for the router indicated by the router identifier to process the first data packet.

In an embodiment, each of the at least one first time includes a time when the router indicated by the router identifier receives the first data packet, and a time when the router indicated by the router identifier forwards the first data packet.

In an embodiment, each of the at least one router identifier is a routing address.

In an embodiment, there are a plurality of router identifiers included in a routing flow table, and each of the plurality of router identifiers corresponds to a respective one of the at least one first time.

In an embodiment, the first data packet format further includes a hop count field, wherein the hop count field includes a total hop count of routers indicated by the plurality of router identifiers for data transmission.

In an embodiment, the time field further includes at least one second time, wherein each of the at least one second time is a time for the first data packet to be transmitted between one or more two-neighbor-hops in the hop count field.

According to a second aspect of embodiments of the present disclosure, there is provided a data packet transmission method, applied to a second device, the method including:
acquiring a first data packet in a first data packet format, wherein the first data packet format includes a router identifier field and a time field, the router identifier field including at least one router identifier that indicates at least one router for forwarding the first data packet, and the time field including at least one first time corresponding to the at least one router identifier.

In an embodiment, each of the at least one first time is a time for the router indicated by the router identifier to process the first data packet. The first data packet is forwarded based on the at least one first time.

In an embodiment, each of the at least one first time includes a time when the router indicated by the router identifier receives the first data packet, and a time when the router indicated by the router identifier forwards the first data packet.

In an embodiment, each of the at least one router identifier is a routing address.

In an embodiment, there are a plurality of router identifiers included in a routing flow table, and each of the plurality of router identifiers corresponds to a respective one of the at least one first time.

In an embodiment, the first data packet format further includes a hop count field, wherein the hop count field includes a total hop count of routers indicated by the plurality of router identifiers for data transmission.

In an embodiment, the time field further includes at least one second time, wherein each of the at least one second time is a time for the first data packet to be transmitted between one or more two-neighbor-hops in the hop count field.

According to a third aspect of embodiments of the present disclosure, there is provided a data packet transmission apparatus, applied to a first device, the apparatus including:
a transmitting unit configured to transmit a first data packet in a first data packet format,
wherein the first data packet format includes a router identifier field and a time field, the router identifier field including at least one router identifier that indicates at least one router for forwarding the first data packet, and the time field including at least one first time corresponding to the at least one router identifier.

In an embodiment, each of the at least one first time is a time for the router indicated by the router identifier to process the first data packet.

In an embodiment, each of the at least one first time includes a time when the router indicated by the router identifier receives the first data packet, and a time when the router indicated by the router identifier forwards the first data packet.

In an embodiment, each of the at least one router identifier is a routing address.

In an embodiment, there are a plurality of router identifiers included in a routing flow table, and each of the plurality of router identifiers corresponds to a respective one of the at least one first time.

In an embodiment, the first data packet format further includes a hop count field, wherein the hop count field includes a total hop count of routers indicated by the plurality of router identifiers for data transmission.

In an embodiment, the time field further includes at least one second time, wherein each of the at least one second time is a time for the first data packet to be transmitted between one or more two-neighbor-hops in the hop count field.

According to a fourth aspect of embodiments of the present disclosure, there is provided a data packet transmission apparatus, applied to a second device, the apparatus including:

a receiving unit configured to acquire a first data packet in a first data packet format, wherein the first data packet format includes a router identifier field and a time field, the router identifier field including at least one router identifier that indicates at least one router for forwarding the first data packet, and the time field including at least one first time corresponding to the at least one router identifier; and a transmitting unit configured to forward the first data packet based on the at least one first time.

In an embodiment, each of the at least one first time is a time for the router indicated by the router identifier to process the first data packet.

In an embodiment, each of the at least one first time includes a time when the router indicated by the router identifier receives the first data packet, and a time when the router indicated by the router identifier forwards the first data packet.

In an embodiment, each of the at least one router identifier is a routing address.

In an embodiment, there are a plurality of router identifiers included in a routing flow table, and each of the plurality of router identifiers corresponds to a respective one of the at least one first time.

In an embodiment, the first data packet format further includes a hop count field, wherein the hop count field includes a total hop count of routers indicated by the plurality of router identifiers for data transmission.

In an embodiment, the time field further includes at least one second time, wherein each of the at least one second time is a time for the first data packet to be transmitted between one or more two-neighbor-hops in the hop count field.

According to a fifth aspect of embodiments of the present disclosure, there is provided a data packet transmission apparatus including:
a processor; and a memory configured to store instructions executable by the processor,
wherein the processor is configured to perform the data packet transmission method according to the first aspect or any one of the embodiments in the first aspect.

According to a sixth aspect of embodiments of the present disclosure, there is provided a data packet transmission apparatus including:
a processor; and a memory configured to store instructions executable by the processor,
wherein the processor is configured to perform the data packet transmission method according to the second aspect or any one of the embodiments in the second aspect.

According to a seventh aspect of embodiments of the present disclosure, there is provided a non-transitory computer-readable storage medium, wherein instructions in the storage medium, when executed by a processor, enable a device to perform the data packet transmission method according to the first aspect or any one of the embodiments in the first aspect.

According to an eighth aspect of embodiments of the present disclosure, there is provided a non-transitory computer-readable storage medium, wherein instructions in the storage medium, when executed by a processor, enable a device to perform the data packet transmission method according to the second aspect or any one of the embodiments in the second aspect.

Technical solutions according to the embodiments of the present disclosure provide the following beneficial effects. A first data packet to be transmitted has a first data packet format, wherein the first data packet format includes a time field, the time field including at least one first time. Therefore, with the embodiments of the present disclosure, routers through which the data packet passes after transmitted by a transmitter can be determined by the transmitter, such that the transmitter completely knows each router through which the data passes. The format of the data packet transmitted includes the first time for each of the routers passed through, thereby ensuring an accurate time for the data packet to arrive at a destination device.

It is to be understood that the above general description and the following detailed description are exemplary and explanatory only and are not intended to limit the present disclosure.

### BRIEF DESCRIPTION OF DRAWINGS

The accompanying drawings, which are incorporated into and constitute a part of this specification, illustrate embodiments consistent with the present disclosure and, together with the specification, serve to explain the principles of the present disclosure.
FIG. 1 is a diagram illustrating a network architecture for IP data packet transmission according to an exemplary embodiment.
FIG. 2 is a schematic diagram illustrating an IP data packet format according to an exemplary embodiment.
FIG. 3 is a flowchart illustrating a data packet transmission method according to an exemplary embodiment.
FIG. 4 is a flowchart illustrating a data packet transmission method according to an exemplary embodiment.
FIG. 5 is a block diagram illustrating a data packet transmission apparatus according to an exemplary embodiment.
FIG. 6 is a block diagram illustrating a data packet transmission apparatus according to an exemplary embodiment.
FIG. 7 is a block diagram illustrating an apparatus for data packet transmission according to an exemplary embodiment.

### DETAILED DESCRIPTION

Reference is made in detail to exemplary embodiments, examples of which are illustrated in the accompanying drawings. When the following description refers to the drawings, the same numerals in different drawings indicate the same or similar elements, unless otherwise indicated. Embodiments described in the following exemplary embodiments are not intended to represent all embodiments consistent with the present disclosure. Rather, they are merely examples of apparatuses and methods consistent with some aspects of the present disclosure as detailed in the appended claims.

Data packet transmission methods according to embodiments of the present disclosure can be applied in a data packet transmission scenario, for example, a scenario in which IP data packets are transmitted between a transmitter device and a receiver device based on an Internet protocol (IP).

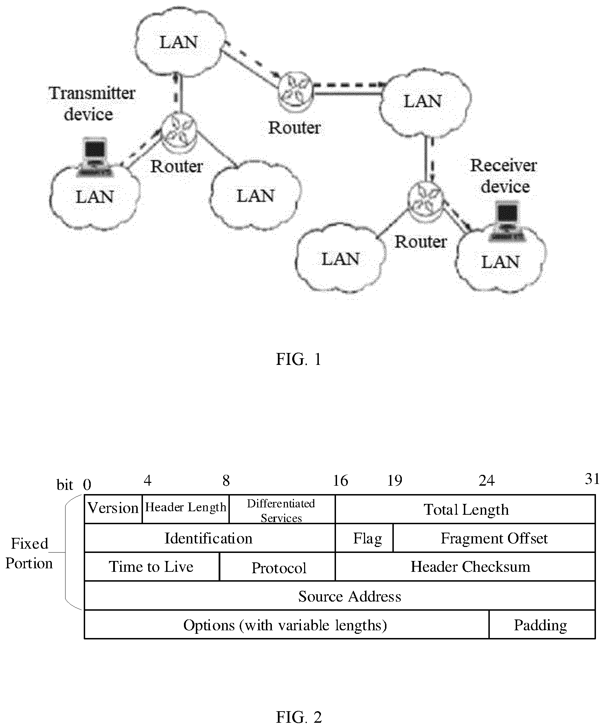

FIG. 1 is a diagram illustrating a network architecture for IP data packet transmission according to an exemplary embodiment. As shown in FIG. 1, individual LANs (Local Area Networks) are connected to each other through routers. A transmitter device routes data packets to be transmitted to a receiver device through the routers.

It can be understood that the network architecture shown in FIG. 1 is for schematic illustration only and may also include other network devices, which are not shown in FIG. 1. The number of the routers included in the network architecture is not limited in the embodiments of the present disclosure.

IP can be understood as a protocol for transfer of information between networks. Based on the IP, IP data packets can be transmitted from a transmitter device such as a user's computer to a receiver device such as a www server in a department or another computer.

In the related art, transmission of IP data packets between a transmitter device and a receiver device can be realized based on IP addresses and IP routers. IP requires that all devices on a network must have a unique IP address, similar to how mail must have a recipient address on it in order for the mailman to deliver it. Likewise, each data packet to be transmitted needs to contain an IP address of a destination device in order for the data packet to be properly delivered to the destination. The same device may have multiple IP addresses, and all network devices that use IP have at least one unique IP address.

The Internet is a large network formed by many networks connected to each other. If IP data packets are to be transmitted over the Internet, in addition to ensuring that each device on the networks has a unique IP address, there must be a transmission mechanism between the networks in order to transmit the IP data packets to the destinations through one network after another. This transmission mechanism is known as IP routing.

Individual networks are connected to each other through routers. The function of a router is to select a transfer path for an IP data packet. In other words, it must rely on the full cooperation of the routers along the path to deliver the IP data packet to its destination. During IP routing, the router is responsible for selecting the path, and the IP data packet is an object to be delivered.

The data packet to be transmitted contains a source address and a destination address in the format shown in FIG. 2. The route through which the data packet passes after the transmitter device corresponding to the source address transmits the data packet is generally determined by the router in the network, so as to forward the data packet. The transmitter device has no knowledge of the path that the router forwards the data packet. Moreover, the time for each router to process the data packet cannot be determined, and the time when the data packet arrives at the receiver device corresponding to the destination address is difficult to determine.

Embodiments of the present disclosure provide a data packet transmission method. Route through which a data packet passes after transmitted by a transmitter device can be determined by the transmitter device, such that the transmitter device completely knows each router through which the data packet passes. The transmitter device specifies the time for each router to process the data packet, thereby ensuring an accurate time for the data packet to arrive at a receiver device.

In an embodiment, the present disclosure may provide a data packet in a particular data packet format that includes a time for the router to process the data packet.

Hereinafter, for the convenience of description, the data packet format that includes the time for the router to process the data packet is referred to as a first data packet format.

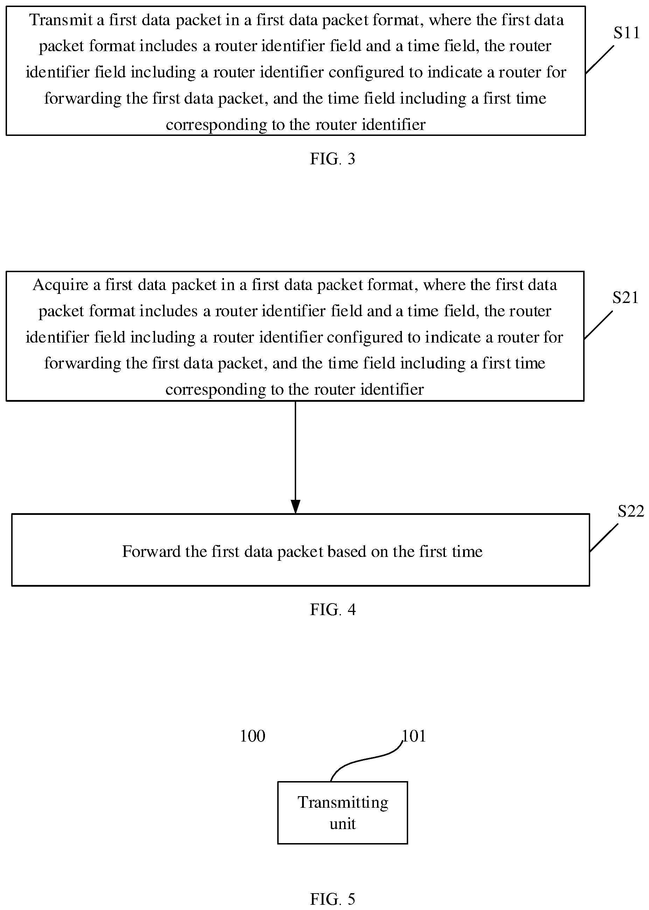

FIG. 3 is a flowchart illustrating a data packet transmission method according to an exemplary embodiment. As shown in FIG. 3, the data packet transmission method is applied to a first device, which may be, for example, a transmitter device, and includes step S 11.

At step S 11, a first data packet is transmitted in the first data packet format.

The first data packet format includes a router identifier field and a time field. The router identifier field includes at least one router identifier that indicates at least one router for forwarding the first data packet. The time field includes at least one first time corresponding to the router identifier.

With the data packet transmission method according to the embodiment of the present disclosure, a first data packet transmitted by a first device has a first data packet format, wherein the first data packet format includes a time field, the time field including a first time which is a time for a router to process the first data packet. Therefore, with the embodiment of the present disclosure, routers through which the data packet passes after transmitted by a transmitter device can be determined by the transmitter device, such that the transmitter device completely knows each router through which the data passes. The time for each of the routers passed through to process the data packet is included in the format of the data packet transmitted, thereby ensuring an accurate time for the data packet to arrive at a receiver device.

In the data packet transmission method according to the embodiment of the present disclosure, the first time is a time for the router indicated by the router identifier to process the first data packet.

In the data packet transmission method according to the embodiment of the present disclosure, the first time may be determined based on a time when the router receives the first data packet and a time when the router forwards the first data packet. The first time includes a time when the router indicated by the router identifier receives the first data packet, and a time when the router indicated by the router identifier forwards the first data packet.

In the data packet transmission method according to the embodiment of the present disclosure, the first time may be a difference between the time when the router forwards the first data packet and the time when the router receives the first data packet.

In the data packet transmission method according to the embodiment of the present disclosure, the router identifier included in the router identifier field is a routing address.

In an embodiment, in the data packet transmission method according to the embodiment of the present disclosure, the data packet in the first data packet format may include a routing list therein. The routing list includes routers that the data packet needs to pass through. For example, a plurality of router identifiers in a one-to-one correspondence with the routers that forward the data packet may be included in the routing list, and are configured to identify the routers that forward the data packet.

In the embodiment of the present disclosure, the router identifier in the router identifier field included in the first data packet format is a plurality of router identifiers included in a routing flow table, and each of the plurality of router identifiers corresponds to a respective first time.

It can be understood that the data packet in the first data packet format further includes a source address and a destination address therein, such that the data packet is transmitted from the transmitter device corresponding to the source address to the receiver device corresponding to the destination address through routes.

In an embodiment, the data packet in the first data packet format includes a source address, a destination address, a routing list including identifiers of routers that the data packet passes through, and a time for a router indicated by each router identifier in the routing list to process the data packet. The routing list may also be referred to as a flow table. The router identifier may be a routing address. In other words, the data packet in the first data packet format may include a source address, a destination address, a flow table including routing addresses, and a time for a router corresponding to each routing address in the flow table to process the data packet.

The time for the router corresponding to each routing address in the flow table to process the data packet may be a difference between the time when the router forwards the data packet and the time when the router receives the data packet.

In an example, it is assumed that the flow table includes N routing addresses corresponding to the routers, wherein N is a positive integer. The data packet having the first data packet format includes at least the following fields:

source address, destination address, routing address 1, data packet processing time by router 1, routing address 2, data packet processing time by router 2, ..., routing address N, data packet processing time by router N.

In the data packet transmission method according to the embodiment of the present disclosure, after the first device transmits the data packet in the first data format, the data packet is sequentially transmitted to the next hop according to the routing list in the flow table, until the data packet is transmitted to the receiver device corresponding to the destination address. For example, in the above example, the data packet starts from the source address, passes through the routing address 1, the routing address 2, ..., and the routing address N in sequence, and is finally transmitted to the receiver device corresponding to the destination address.

In the data packet transmission method according to the embodiment of the present disclosure, the routing is specified by the transmitter device, and the transmitter device specifies that the data packet passes through each router on the path from the source address to the destination address. Therefore, during the process of forwarding the data packet by the router to the receiver device corresponding to the destination address, there are no intermediate routers between adjacent routers, and the order of the routers that the data packet passes through cannot be changed.

With the data packet transmission method according to the embodiment of the present disclosure, since the fixed path and the time for the router to process the data packet are specified, the time for the data packet to arrive at the destination address from the source address can be accurately controlled.

In an embodiment, the first data packet format further includes a hop count field. The hop count field includes a total hop count of routers indicated by the plurality of router identifiers for data transmission.

In the embodiment of the present disclosure, the hop count field is included in the first data packet format, such that the number of the routing addresses that the data packet needs to pass through from the source address to the destination address may be determined. For example, in the above example, if N routing addresses are included, a hop count in the hop field that may be included in the data packet is N+1.

In an embodiment, in the data packet transmission method according to the embodiment of the present disclosure, the time field further includes at least one second time, wherein each second time is a time for the first data packet to be transmitted between one or more two-neighbor-hops in the hop count field.

With the data packet transmission method according to the embodiment of the present disclosure, since the fixed path and the first time for the router to process the data packet are specified, and the second time for the first data packet to be transmitted between every two-neighbor-hop is specified, the time for the data packet to arrive at the destination address from the source address can be accurately controlled.

FIG. 4 is a flowchart illustrating a data packet transmission method according to an exemplary embodiment. As shown in FIG. 4, the data packet transmission method is applied to a second device, which may be, for example, a router, and includes steps S21 and S22.

At step S21, a first data packet in a first data packet forma is acquired.

The first data packet format includes a router identifier field and a time field, the router identifier field including at least one router identifier that indicates at least one router for forwarding the first data packet, and the time field including at least one first time corresponding to the router identifier.

At step S22, the first data packet is forwarded based on the first time.

In the embodiment of the present disclosure, when the second device forwards the first data packet based on the first time, a time difference between a time when the router receives the data packet and a time when the router transmits the data packet being less than or equal to the first time, is satisfied.

In an embodiment, the first time is a time for the router indicated by the router identifier to process the first data packet.

In an embodiment, the first time includes a time when the router indicated by the router identifier receives the first data packet, and a time when the router indicated by the router identifier forwards the first data packet. When the router indicated by the router identifier forwards the first data packet based on the first time, it can be understood that a time difference between a time when the router transmits the data packet and a time when the router receives the data packet being less than or equal to a time difference between the time when the router indicated by the router identifier receives the first data packet and the time when the router indicated by the router identifier forwards the first data packet, is satisfied.

It can be understood that the first data packet acquired and forwarded by the second device in the embodiment of the present disclosure has the same data packet format as the first data packet transmitted by the first device in the above embodiment. For example, the router identifier included in the router identifier field is a routing address. There are a plurality of router identifiers included in a routing flow table, and each of the plurality of router identifiers corresponds to a respective first time. For another example, the first data packet format further includes a hop count field, wherein the hop count field includes a total hop count of routers indicated by the plurality of router identifiers for data transmission. The time field further includes at least one second time, wherein each second time is a time for the first data packet to be transmitted between one or more two-neighbor-hops in the hop count field.

For the description of the first data packet format of the first data packet acquired and forwarded by the second device in the embodiment of the present disclosure, reference can be made to the relevant description of the data packet transmitted by the first device as described above, which will not be repeated herein.

With the data packet transmission method according to the embodiment of the present disclosure, the IP data packet includes a list of routers (also referred to as a flow table) and the time required for each router to process the data packet, in addition to the source address and the destination address. After the data packet is transmitted from the transmitter device, the data packet is sequentially transmitted to the next hop according to the routing list in the flow table and the processing time until the data packet is transmitted to the destination address, such that an accurate time for the data packet to arrive at the receiver device can be ensured.

Based on the same concept, an embodiment of the present disclosure further provides a data packet transmission apparatus.

It can be understood that the data packet transmission apparatus according to the embodiment of the present disclosure includes a hardware structure and/or a software module corresponding to each of the above functions in order to realize the functions. The embodiment of the present disclosure can be implemented in the form of hardware or a combination of hardware and computer software, in conjunction with units and algorithm steps of various examples disclosed in the embodiment of the present disclosure. Whether a certain function is performed by hardware or computer software driving hardware depends on specific applications and design constraints of the technical solution. Those skilled in the art may implement the described functionality using a different method for each specific application, but such implementation should not be considered beyond the scope of the technical solution of the embodiment of the present disclosure.

FIG. 5 is a block diagram illustrating a data packet transmission apparatus according to an exemplary embodiment. Referring to FIG. 5, the data packet transmission apparatus 100 is applied to a first device, and includes a transmitting unit 101.

The transmitting unit 101 is configured to transmit a first data packet in a first data packet format.

The first data packet format includes a router identifier field and a time field, the router identifier field including at least one router identifier that indicates at least one router for forwarding the first data packet, and the time field including at least one first time corresponding to the router identifier.

In an embodiment, the first time is a time for the router indicated by the router identifier to process the first data packet.

In an embodiment, the first time includes a time when the router indicated by the router identifier receives the first data packet, and a time when the router indicated by the router identifier forwards the first data packet.

In an embodiment, the router identifier is a routing address.

In an embodiment, there are a plurality of router identifiers included in a routing flow table, and each of the plurality of router identifiers corresponds to a respective first time.

In an embodiment, the first data packet format further includes a hop count field, wherein the hop count field includes a total hop count of routers indicated by the plurality of router identifiers for data transmission.

In an embodiment, the time field further includes at least one second time, wherein each second time is a time for the first data packet to be transmitted between one or more two-neighbor-hops in the hop count field.

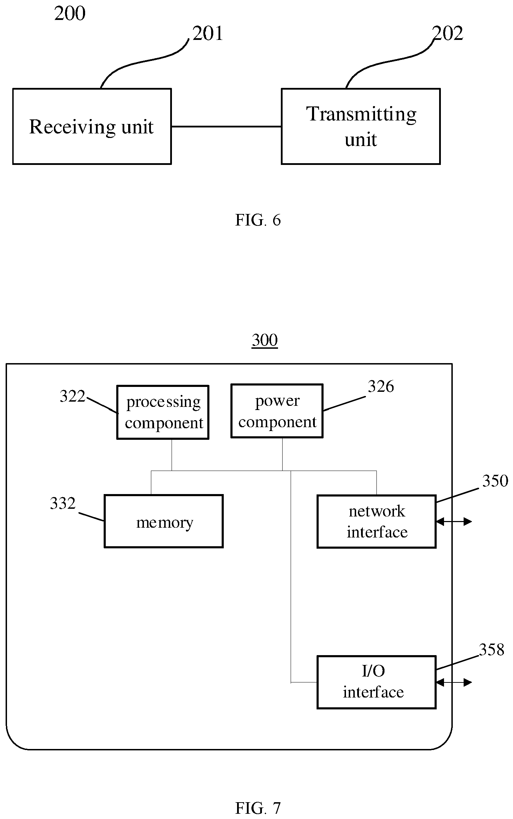

FIG. 6 is a block diagram illustrating a data packet transmission apparatus according to an exemplary embodiment. Referring to FIG. 6, the data packet transmission apparatus 200 is applied to a second device, and includes a receiving unit 201 and a transmitting unit 202.

The receiving unit 201 is configured to acquire a first data packet in a first data packet format. The first data packet format includes a router identifier field and a time field, the router identifier field including at least one router identifier that indicates at least one router for forwarding the first data packet, and the time field including at least one first time corresponding to the router identifier, which is a time for the router indicated by the router identifier to process the first data packet. The transmitting unit 202 is configured to forward the first data packet based on the first time.

In an embodiment, the first time is a time for the router indicated by the router identifier to process the first data packet.

In an embodiment, the first time includes a time when the router indicated by the router identifier receives the first data packet, and a time when the router indicated by the router identifier forwards the first data packet.

In an embodiment, the router identifier is a routing address.

In an embodiment, there are a plurality of router identifiers included in a routing flow table, and each of the plurality of router identifiers corresponds to a respective first time.

In an embodiment, the first data packet format further includes a hop count field, wherein the hop count field includes a total hop count of routers indicated by the plurality of router identifiers for data transmission.

In an embodiment, the time field further includes at least one second time, wherein each second time is a time for the first data packet to be transmitted between one or more two-neighbor-hops in the hop count field.

With respect to the apparatuses in the above embodiments, the specific manner in which each module performs an operation has been described in detail in the method embodiments, and will not be described in detail herein.

FIG. 7 is a block diagram illustrating an apparatus 300 for data packet transmission according to an exemplary embodiment. For example, the apparatus 300 may be provided as a transmitter device or a router device. Referring to FIG. 7, the apparatus 300 includes: a processing component 322, which further includes one or more processors; and a memory resource, represented by a memory 332, for storing instructions, such as application programs, executable by the processing component 322. The application programs stored in the memory 332 may include one or more modules that each correspond to a set of instructions. Further, the processing component 322 is configured to execute the instructions to perform the methods as described above.

The apparatus 300 may further include a power component 326 configured to perform power management of the apparatus 300, a wired or wireless network interface 350 configured to connect the apparatus 300 to a network, and an input/output (I/O) interface 358. The apparatus 300 may be operated based on an operating system stored in the memory 332, such as Windows Server^{™}, Mac OS X^{™}, Unix^{™}, Linux^{™}, FreeBSD^{™}, or the like.

In an exemplary embodiment, there is further provided a non-transitory computer-readable storage medium including instructions, such as the memory 332 including instructions, executable by the processing component 322 in the apparatus 300 to perform the methods as described above. For example, the non-transitory computer-readable storage medium may be an ROM, a random access memory (RAM), a CD-ROM, a magnetic tape, a floppy disk, an optical data storage device, and the like.

It can be further understood that "a plurality of" in the present disclosure refers to two or more, and other quantifiers are similar thereto. "And/or" describes the association relationship of associated objects, indicating that there may be three relationships, for example, A and/or B may indicate that A exists alone, A and B exist at the same time, and B exists alone. The character "/" generally indicates that the contextual objects are in an "or" relationship. The singular forms "a," "the," and "said" are also intended to include the plural forms unless the context clearly dictates otherwise.

It can be further understood that terms "first," "second," and the like are used to describe various information, but such information should not be limited by these terms. These terms are used only to distinguish the same type of information from one another and do not indicate a particular order or level of importance. Indeed, the expressions "first," "second," and the like can be used interchangeably. For example, the first information may also be referred to as the second information, and similarly, the second information may also be referred to as the first information, without departing from the scope of the present disclosure.

It can be further understood that, in the embodiments of the present disclosure, though operations are depicted in a particular order in the drawings, they should not be construed as requiring that such operations be performed in the particular order shown or in serial order, or that all of the operations shown be performed to obtain a desired result. Multitasking and parallel processing may be advantageous in certain circumstances.

Other embodiments of the present disclosure will readily occur to those skilled in the art upon consideration of the specification and practice of the invention disclosed herein. The present application is intended to cover any variations, uses, or adaptations of the present disclosure that follow the general principles of the present disclosure and include common general knowledge or conventional technical means in the art not disclosed herein. The specification and embodiments are to be considered exemplary only, with a true scope and spirit of the present disclosure being indicated by the following claims.

It should be understood that the present disclosure is not limited to the precise structures which have been described above and shown in the accompanying drawings, and that various modifications and changes may be made without departing from the scope thereof. The scope of the present disclosure is limited only by the appended claims.

## Claims

1. A data packet transmission method, applied to a first device, comprising:
transmitting a first data packet in a first data packet format,
wherein
the first data packet format comprises a router identifier field and a time field;
the router identifier field comprises at least one router identifier that indicates at least one router for forwarding the first data packet; and
the time field comprises at least one first time corresponding to the at least one router identifier.

2. The data packet transmission method according to claim 1, wherein each of the at least one first time comprises a time for the router indicated by the router identifier to process the first data packet.

3. The data packet transmission method according to claim 1 or 2, wherein each of the at least one first time comprises:
a time when the router indicated by the router identifier receives the first data packet, and a time when the router indicated by the router identifier forwards the first data packet.

4. The data packet transmission method according to any one of claims 1 to 3, wherein each of the at least one router identifier is a routing address.

5. The data packet transmission method according to any one of claims 1 to 4, wherein there are a plurality of router identifiers comprised in a routing flow table, and each of the plurality of router identifiers corresponds to a respective one of the at least one first time.

6. The data packet transmission method according to claim 5, wherein the first data packet format further comprises a hop count field; and
the hop count field comprises a total hop count of routers indicated by the plurality of router identifiers for data transmission.

7. The data packet transmission method according to claim 6, wherein the time field further comprises at least one second time; and
each of the at least one second time is a time for the first data packet to be transmitted between one or more two-neighbor-hops in the hop count field.

8. A data packet transmission method, applied to a second device, comprising:
acquiring a first data packet in a first data packet format, wherein the first data packet format comprises a router identifier field and a time field, the router identifier field comprising at least one router identifier that indicates at least one router for forwarding the first data packet, and the time field comprising at least one first time corresponding to the at least one router identifier; and
forwarding the first data packet based on the at least one first time.

9. The data packet transmission method according to claim 8, wherein each of the at least one first time comprises a time for the router indicated by the router identifier to process the first data packet.

10. The data packet transmission method according to claim 8 or 9, wherein each of the at least one first time comprises a time when the router indicated by the router identifier receives the first data packet, and a time when the router indicated by the router identifier forwards the first data packet.

11. The data packet transmission method according to any one of claims 8 to 10, wherein each of the at least one router identifier is a routing address.

12. The data packet transmission method according to any one of claims 8 to 11, wherein there are a plurality of router identifiers comprised in a routing flow table, and each of the plurality of router identifiers corresponds to a respective one of the at least one first time.

13. The data packet transmission method according to claim 12, wherein the first data packet format further comprises a hop count field; and
the hop count field comprises a total hop count of routers indicated by the plurality of router identifiers for data transmission.

14. The data packet transmission method according to claim 13, wherein the time field further comprises at least one second time; and
each of the at least one second time is a time for the first data packet to be transmitted between one or more two-neighbor-hops in the hop count field.

15. A data packet transmission apparatus, applied to a first device, comprising:
a transmitting unit configured to transmit a first data packet in a first data packet format,
wherein
the first data packet format comprises a router identifier field and a time field;
the router identifier field comprises at least one router identifier that indicates at least one router for forwarding the first data packet;
the time field comprises at least one first time corresponding to the at least one router identifier; and
each of the at least one first time is a time for the router indicated by the router identifier to process the first data packet.

16. The data packet transmission apparatus according to claim 15, wherein each of the at least one first time comprises a time for the router indicated by the router identifier to process the first data packet.

17. The data packet transmission apparatus according to claim 15 or 16, wherein each of the at least one first time comprises a time when the router indicated by the router identifier receives the first data packet, and a time when the router indicated by the router identifier forwards the first data packet.

18. A data packet transmission apparatus, applied to a second device, comprising:
a receiving unit configured to acquire a first data packet in a first data packet format, wherein the first data packet format comprises a router identifier field and a time field, the router identifier field comprising at least one router identifier that indicates at least one router for forwarding the first data packet, and the time field comprising at least one first time corresponding to the at least one router identifier; and
a transmitting unit configured to forward the first data packet based on the at least one first time.

19. The data packet transmission apparatus according to claim 18, wherein each of the at least one first time comprises a time for the router indicated by the router identifier to process the first data packet.

20. The data packet transmission apparatus according to claim 18 or 19, wherein each of the at least one first time comprises a time when the router indicated by the router identifier receives the first data packet, and a time when the router indicated by the router identifier forwards the first data packet.

21. A data packet transmission apparatus, comprising:
a processor; and
a memory configured to store instructions executable by the processor, wherein
the processor is configured to perform the data packet transmission method according to any one of claims 1 to 7.

22. A data packet transmission apparatus, comprising:
a processor; and
a memory configured to store instructions executable by the processor,
wherein the processor is configured to perform the data packet transmission method according to any one of claims 8 to 14.

23. A non-transitory computer-readable storage medium, instructions in which, when executed by a processor, enable a device to perform the data packet transmission method according to any one of claims 1 to 7.

24. A non-transitory computer-readable storage medium, instructions in which, when executed by a processor, enable a device to perform the data packet transmission method according to any one of claims 8 to 14.
